# EUROPÄISCHE PATENTANMELDUNG

(11) **EP 0 782 822 A1**
(43) Veröffentlichungstag der Anmeldung: **09.07.1997**
(21) Anmeldenummer: 96120332.0
(22) Anmeldetag: 18.12.1996
(51) Int. Cl.: A21C 15/00, A47G 19/30, A21C 9/04

(54) **Anordnung zum Garnieren von Kuchen- und Tortenrändern**

(30) Priorität: 03.01.1996 DE 19600057
(71) Anmelder: Birtalan, Andreas, 75180 Pforzheim (DE); Birtalan, Gabriele, 75180 Pforzheim (DE)
(72) Erfinder: Birtalan, Andreas, 75180 Pforzheim (DE); Birtalan, Gabriele, 75180 Pforzheim (DE)
(74) Vertreter: von der Heyde, Detlev, Dipl.-Ing. (FH)

(57) **Zusammenfassung**

Das Garnieren der Ränder von Kuchen- und Torten ist dadurch erschwert, daß diese in Normallage wegen der im wesentlichen senkrechten Ausrichtung schlecht zu bearbeiten sind.

Die Anordnung gemäß der Erfindung sieht vor, daß der Kuchen oder die Torte (15) für den Garniervorgang von Stiften (6), die in einer Grundplatte (1) gehaltert sind, durchdrungen werden, so daß die Platte (1) mit dem Kuchen oder der Torte (15) zum Garnieren des Randes schräg gestellt werden kann.

## Beschreibung

Die Erfindung betrifft eine Anordnung gemäß dem Oberbegriff des Anspruchs 1.

Eine Vorrichtung mit der gleichen Aufgabenstellung ist durch das deutsche Gebrauchsmuster mit der Rollennummer. G 84 37 532 bekannt. Diese Vorrichtung sieht U-förmige Einsteckklammern vor, die von unten und von oben zentrisch in den Kuchen- bzw. Tortenkörper eingesteckt werden. Über die dadurch gegebene Handhabung wird der Kuchen- bzw. Tortenkörper senkrecht gestellt und über ein sich in einer länglichen Schale befindliches Garniergut gerollt.

Damit das Garniergut am Kuchen- oder Tortenrand haften bleibt, muß dieser zuvor entsprechend behandelt werden. Vornehmlich erfolgt dieses durch Aufbringen von Konfitüre oder einer Sahnecreme. Dieses muß in herkömmlicher Weise erfolgen. Durch das Abrollen kann die Haftschicht für das Garniergut in Mitleidenschaft gezogen werden. Ein Dekorieren des Kuchen- oder Tortenrandes außer mit Garniergut, wie Streusel, Krokant oder dergleichen ist bei dieser Vorrichtung nicht möglich.

Die Aufgabe der Erfindung besteht daher darin, eine Anordnung zum Garnieren von Kuchen- und Tortenrändern zu schaffen, die eine individuelle Gestaltung der Randgarnierung in optimaler Arbeitsposition erlaubt.

Diese Aufgabe wird durch die im Anspruchs 1 angegebenen Merkmale gelöst. Die Unteransprüche zeigen vorteilhafte Ausgestaltungen des Erfindungsgegenstandes auf.

Die durch die Erfindung erzielten Vorteile bestehen insbesondere darin, daß der Kuchen- bzw. Tortenkörper durch Stifte derart lösbar auf der Grundplatte fixiert wird, daß eine Schräglage möglich ist, die eine Randgarnierung unter optimalen Arbeitsbedingungen gewährleistet.

Anhand eines Ausführungsbeispiels wird die Erfindung in Verbindung mit den Zeichnungen nachfolgend näher erläutert.
Es zeigt:
- Fig.1: eine Anordnung gemäß der Erfindung in Draufsicht.
- Fig.2: die Anordnung der Fig.1 im Schnitt II-II mit einem strichliniert dargestellten Tortenkörper.
- Fig.3: eine schematische Darstellung der Anordnung gemäß Fig.1 in der Arbeitslage zur Randgarnierung.
- Fig.4: eine schematische Darstellung der Anordnung gemäß Fig.1 in der Arbeitslage zum Garnieren der Tortenoberseite.

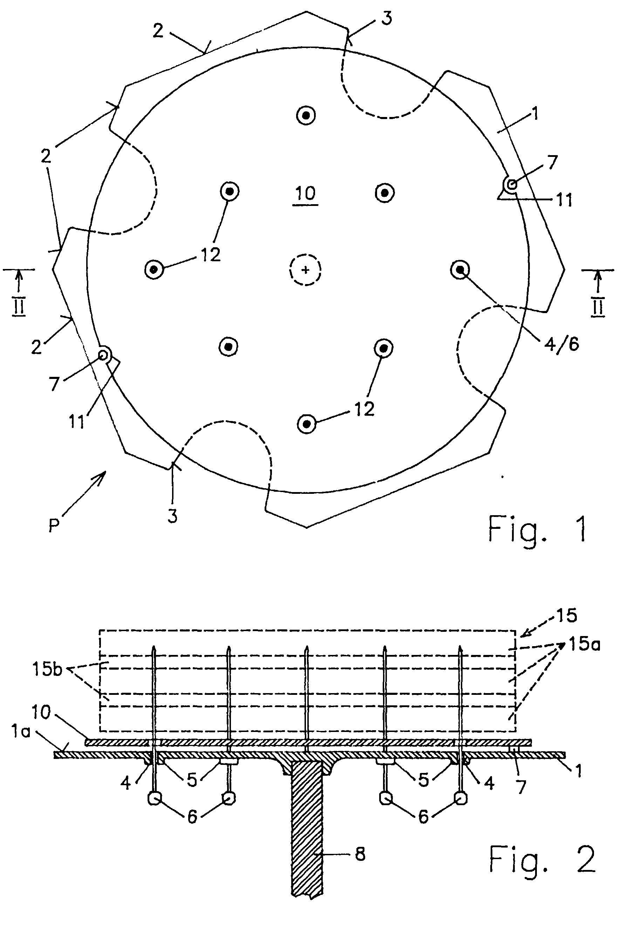

Fig.1 zeigt eine Anordnung gemäß der Erfindung in Draufsicht, mit der insbesondere das Garnieren und Verzieren der Ränder von Kuchen- und Tortenkörpern erleichtert wird. Fig.2 zeigt die Anordnung der Fig.1 im Schnitt II-II. Die Basis der Anordnung ist eine Grundplatte 1, die auf einem zentrisch angeordneten Schaft 8 befestigt ist. Die Grundplatte 1 ist ein kreisförmiges Polygon mit acht Polygonflächen 2. Jeweils zwei über Kreuz angeordnete Polygonflächen 2 haben radial zur Mitte gerichtete Ausschnitte 3. Diese ragen bis unter eine auf der Grundplatte 1 aufliegende runde Tortenplatte 10. Letztere wird durch in der Grundplatte 1 befestigte Bolzen 7, die in Ausschnitte 11 der Tortenplatte 10 ragen, lagefixiert.

Im Bereich der Tortenplatte 10 hat die Grundplatte 1 Durchgangslöcher 4, die zur Aufnahme von Stiften 6 vorgesehen sind. Gemäß Fig.2 hat die Grundplatte 1 an der Unterseite im Bereich der Löcher 4 Verstärkungen 5. Dadurch ist eine stabile Führung und die notwendige Haftung der Stifte 6 in den Löchern 4 gewährleistet. Je nach der Höhe eines Kuchens oder des Aufbaus einer Torte 15 sind die Stifte 6 unterschiedlich lang. Wie die Schnittdarstellung der Fig.2 zeigt, sind bei der beispielsweise aus drei Kuchenteilen 15a und zwei dazwischen befindlichen Füllungen 15b bestehende Torte 15 die Stifte 6 gerade so lang, daß sie bis in das obere Kuchenteil 15a ragen.

Die auf der Grundplatte 1 durch die Bolzen 7 fixierte Tortenplatte 10 hat Bohrungen 12, die deckungsgleich mit den Durchgangslöchern 4 in der Grundplatte 1 angeordnet sind. Die Bohrungen 12 sind jedoch etwas größer im Durchmesser als die Löcher 6, wie die Fig.1 und 2 erkennen lassen.

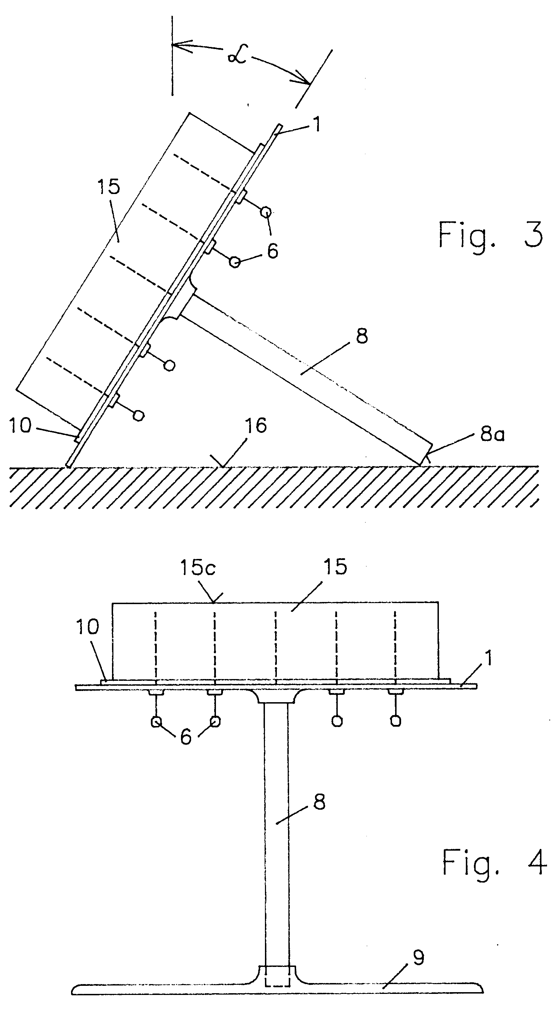

Zum Garnieren des Tortenrandes wird die vorbeschriebene Anordnung gemäß Fig.3 auf eine Ebene 16 gelegt, wobei die Grundplatte 1 mit ihrem Rand und der Schaft 8 mit seinem Ende aufliegt. Bei dieser Schräglage der Grundplatte 1 wird die Torte 15 durch die Stifte 6 fest auf der Tortenplatte 10 gehalten. Durch die Polygonflächen 2 (Fig. 1) ist jeweils eine stabile Lage gewährleistet. Eine runde Grundplatte ist natürlich auch möglich. In diesem Fall muß nur dafür gesorgt werden, daß ein Wegrollen unterbunden wird. Der Schrägungswinkel hängt vom Durchmesser der Grundplatte und von der Länge des Schaftes 8 ab. Der Winkel kann zur Optimierung der Arbeitslage zum Garnieren über einen relativ großen Bereich gewählt werden. Maßgebend dabei ist, daß der Schwerpunkt der vorbeschriebenen Anordnung mit der Torte 15 stets innerhalb der Unterstützungsfläche liegt.

Nach der Randgarnierung wird die in Fig.3 dargestellte Anordnung mit Torte 15 aufgerichtet und mit dem Schaft 8 in eine Ständerplatte 9 gesteckt. Nunmehr kann die Oberseite 15c der Torte 15 garniert werden. Nachdem dieses erfolgt ist, werden die Stifte 6 nach unten herausgezogen. Nunmehr kann die Torte 15 zusammen mit der Tortenplatte 10 über die Ausschnitte 3 von der Grundplatte 1 abgehoben werden. Mittels eines flachen großflächigen Tortenhebers kann die Torte 15 von der Tortenplatte 10 abgelöst werden.

Bei einer anderen nicht dargestellten Ausführung der Anordnung ist eine z.B. runde Grundplatte vorgesehen, die keine Ausschnitte 3 hat, da keine Tortenplatte 10 vorgesehen ist. Die Platte 1 ist entsprechend Fig.1 mit Löchern 4 versehen. Die Stifte werden in diesem Fall von oben in die Grundplatte 1 bis zu einem Anschlag mit Klemmsitz eingesteckt. Nach der vorbeschriebenen Garnierung wird die Torte 15 mittels eines großflächigen, gabelförmigen Tortenhebers abgehoben. Bei einer Anordnung der Stifte gemäß Fig.1 ist der Tortenheber so ausgebildet, daß die Zwischenräume zwischen den Gabelteilen auf die Stiftreihen ausgerichtet sind (Pfeilrichtung P). Eine Markierung am Rand der Grundplatte zeigt, wo der Tortenheber angesetzt werden muß.

Die Stift 6 können einen runden, dreieckigen, quadratischen, sternförmigen oder messerartigen Querschnitt haben. Die Löcher 4 in der Grundplatte 1 und die Bohrungen 12 in der Tortenplatte 10 sind dann entsprechend ausgebildet.

## Patentansprüche

1. Anordnung zum Garnieren von Kuchen- und Tortenrändern, bei der der Kuchenboden oder die vorzugsweise aus einer Schichtung von Kuchenteilen und Füllungen bestehende Torte von einseitig zugespitzten Stiften quer zur Kuchen- oder Tortenoberfläche durchdrungen werden, gekennzeichnet durch eine Grundplatte (1), die einen der Kuchen- bzw. Tortengröße angepaßten Durchmesser hat und die mit mehreren über die Fläche der Grundplatte verteilten Stiften (6) versehen ist, die aus der Deckseite der Grundplatte (1) herausragen, und die zur Randgarnierung in eine Schräglage bringbar ist.

2. Anordnung nach Anspruch 1, dadurch gekennzeichnet, daß die Stifte (6) auswechselbar sind und je nach Höhe des Kuchens oder der Torte (15) unterschiedlich lang sind.

3. Anordnung nach Anspruch 1, dadurch gekennzeichnet, daß die Grundplatte (1) Durchgangslöcher (4) zur Aufnahme der Stifte (6) hat.

4. Anordnung nach Anspruch 1, dadurch gekennzeichnet, daß die Grundplatte (1) am Rand mindestens ein Paar diametral zueinander angeordnete und radial gerichtete Ausschnitte (3) hat.

5. Anordnung nach Anspruch 1, dadurch gekennzeichnet, daß die Grundplatte (1) zentrisch auf einem Schaft (8) befestigt ist und daß dieser Schaft so lang ist, daß die sich mit ihrem Rand und dem Schaftende (8a) auf einer Ebene (16) abstützende Grundplatte (1) mit der Senkrechten einen Winkel (α) bildet, der so gewählt ist, daß der Schwerpunkt der Anordnung mit dem zu garnierenden Gut (Torte 15) innerhalb der Unterstützungsfläche liegt.

6. Anordnung nach Anspruch 5, dadurch gekennzeichnet, daß die Grundplatte (1) als kreisförmiges Polygon ausgebildet ist.

7. Anordnung nach Anspruch 3, dadurch gekennzeichnet, daß die die Stifte (6) aufnehmenden Löcher (4) auf die Zwischenräume eines großflächigen, gabelförmigen Tortenhebers ausgerichtet sind.

8. Anordnung nach Anspruch 3, dadurch gekennzeichnet, daß auf der Grundplatte (1) eine lagefixierte Tortenplatte (10) angeordnet ist, die einen dem Kuchenboden bzw. der Torte (15) entsprechenden Durchmesser hat und deckungsgleich mit den Durchgangslöchern (4) freigängige Bohrungen (12) hat.

9. Anordnung nach Anspruch 6, dadurch gekennzeichnet, daß eine Ständerplatte (9) zur senkrechten Aufnahme des Schaftes (8) vorgesehen ist.

10. Anordnung nach Anspruch 8, dadurch gekennzeichet, daß die Stifte (6) einen runden, dreieckförmigen, quadratischen, sternförmigen oder messerartigen Querschnitt haben und die Löcher (4) in der Grundplatte (1) und die Bohrungen (12) in der Tortenplatte (10) entsprechend ausgebildet sind.
